# EUROPEAN PATENT APPLICATION

(11) **EP 4 152 786 A1**
(43) Date of publication of application: **22.03.2023**
(21) Application number: 20935347.3
(22) Date of filing: 14.05.2020
(51) Int. Cl.: H04W 8/22, H04W 24/10

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/019305
(87) International publication number: WO 2021/229759

(57) **Abstract**

A terminal according to an aspect of the present disclosure includes: a control section that controls reporting of a terminal capability corresponding to a channel state information (CSI) codebook type by using an index corresponding to a candidate of a combination of a plurality of parameters for a CSI resource; and a transmitting section that transmits information of the terminal capability corresponding to the CSI codebook type.

## Description

### Technical Field

The present disclosure relates to a terminal, a radio communication method, and a base station in next-generation mobile communication systems.

### Background Art

In the universal mobile telecommunications system (UMTS) network, the specifications of long term evolution (LTE) have been drafted for the purpose of further increasing data rates, providing low delays, and so on (Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

Rel. 15 NR supports reporting UE capability information regarding resources/ports (for example, CSI codebook) of a reference signal (for example, CSI-RS) for channel state information (CSI) from a UE to a network.

In a future radio communication system (Rel. 16 or later), it is assumed that the UE reports, as UE capability information, information regarding the number of CSI-RS resources/the number of ports for each combination of a plurality of bands (band combination (BC)), in addition to information regarding the number of CSI-RS resources/the number of ports (for example, triplets) for each band. Further, in the future radio communication system, it is also conceivable that a CSI codebook type is added.

When the UE reports UE capability for the number of CSI-RS resources/the number of ports (for example, triplets) per band/per BC/per CSI codebook type, overheads of UE capability information reported by the UE may increase.

For this reason, it is expected to reduce the overheads of the UE capability information reported from the UE, but how to suppress the increase in the overheads has not been sufficiently studied.

Therefore, an object of the present disclosure is to provide a terminal, a radio communication method, and a base station capable of suppressing an increase in overheads of capability information reported by a UE.

### Solution to Problem

A terminal according to an aspect of the present disclosure includes: a control section that controls reporting of a terminal capability corresponding to a channel state information (CSI) codebook type by using an index corresponding to a candidate of a combination of a plurality of parameters for a CSI resource; and a transmitting section that transmits information of the terminal capability corresponding to the CSI codebook type.

### Advantageous Effects of Invention

According to an aspect of the present disclosure, it is possible to suppress an increase in overheads of capability information reported by UE.

### Brief Description of Drawings

Fig. 1 is a diagram illustrating an example of communication control between a UE and a network regarding UE capability information.
Fig. 2 is a diagram illustrating an example of parameters related to a CSI-RS reported by a UE for each band.
Fig. 3 is a diagram illustrating an example of parameters related to a CSI-RS reported by a UE for each BC.
Fig. 4 is a diagram illustrating an example of UE capability information report control according to a first aspect.
Fig. 5 is a diagram illustrating another example of the UE capability information report control according to the first aspect.
Fig. 6 is a diagram illustrating an example of a schematic configuration of a radio communication system according to one embodiment.
Fig. 7 is a diagram illustrating an example of a configuration of a base station according to one embodiment.
Fig. 8 is a diagram illustrating an example of a configuration of a user terminal according to one embodiment.
Fig. 9 is a diagram illustrating an example of a hardware configuration of the base station and the user terminal according to one embodiment.

### Description of Embodiments

### (UE Capability Information Report (UE capability report))

In a radio communication system, a terminal (which is also referred to as a user terminal, user equipment (UE), or the like) reports capability information of the terminal to a network (for example, a base station or an operator) for each function used for communication. UE capability information reported for each function is reported in various units such as per UE and per band.

The network controls radio communication (for example, transmission/reception) with each UE, on the basis of the capability information reported from the UE. On the other hand, even if UE capability information (for example, UE capability information or the like for a band that is not specified) not used in the radio communication system is reported to the network from the UE, the network cannot use the reported UE capability information, so that useless information is reported.

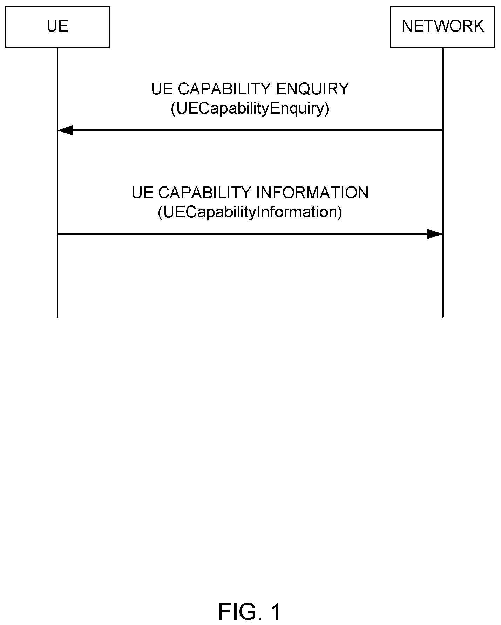

Therefore, before the UE reports the UE capability information of its own terminal, the network may notify the UE of information regarding communication conditions (for example, a supported band or the like) used/supported in the network (or a communication system used by the network) (refer to Fig. 1). The UE may determine the content/value of the UE capability information (for example, UECapabilityInformation) reported to the network, on the basis of the information notified from the network.

The information notified from the network to the UE may be referred to as a UE capability query/UE capability enquiry (for example, UECapabilityEnquiry) or a UE capability request filter (for example, UE-CapabilityRequestFilter) .

That is, the network may notify the UE of information regarding the UE capability that needs to be reported (for example, a parameter and a parameter range) or information regarding the UE capability that does not need to be reported (for example, a parameter and a parameter range) in advance.

The UE capability enquiry (for example, UECapabilityEnquiry) information may be included in a predetermined message transmitted from the network to the UE. The predetermined message may be a DL-DCCH-message. The UE capability enquiry information may include information (for example, capabilityRequestFilter or UE-CapabilityRequestFilterNR) that the network requests the UE to filter the UE capability. The information requesting to filter the UE capability may include information (for example, CodebookParameterFilter) regarding filtering of codebook parameters corresponding to channel state information (CSI).

For example, the UE may report information regarding the CSI reporting as the UE capability information.

### (CSI Report or Reporting)

In Rel. 15 NR, a terminal (also referred to as a user terminal, user equipment (UE), or the like) generates (also referred to as determine, calculate, estimate, measure, or the like) channel state information (CSI) on the basis of a reference signal (RS) (or a resource for the RS), and transmits (also referred to as report, feedback, or the like) the generated CSI to a network (for example, a base station). The CSI may be transmitted to the base station by using a physical uplink control channel (PUCCH) or a physical uplink shared channel (PUSCH), for example.

The RS used for generating the CSI may be at least one of a channel state information reference signal (CSI-RS), a synchronization signal/physical broadcast channel (SS/PBCH) block, a synchronization signal (SS), or a demodulation reference signal (DMRS), for example.

The CSI-RS may include at least one of non zero power (NZP) CSI-RS or CSI-interference management (CSI-IM). The SS/PBCH block may be a block including an SS and a PBCH (and a corresponding DMRS), and may be referred to as an SS block (SSB) or the like. The SS may include at least one of a primary synchronization signal (PSS) or a secondary synchronization signal (SSS).

The CSI may include at least one of parameters (CSI parameters) including a channel quality indicator (CQI), a precoding matrix indicator (PMI), a CSI-RS resource indicator (CRI), an SS/PBCH block resource indicator (SS/PBCH block indicator (SSBRI)), a layer indicator (LI), a rank indicator (RI), layer 1 reference signal received power (L1-RSRP), L1-reference signal received quality (RSRQ), an L1-signal-to-noise and interference ratio (or signal to interference plus noise ratio) (SINR), an L1-signal to noise ratio (SNR), or the like.

The UE may receive information (report configuration information) regarding CSI reporting and control the CSI reporting on the basis of the report configuration information. The report configuration information may be, for example, "CSI-ReportConfig" as an information element (IE) of radio resource control (RRC). Note that, in the present disclosure, the RRC IE may be rephrased as an RRC parameter, a higher layer parameter, or the like.

The report configuration information (for example, "CSI-ReportConfig" as the RRC IE) may include, for example, at least one of the following.
· Information regarding the type of the CSI reporting (report type information, for example, "reportConfigType" as the RRC IE)
· Information regarding one or more quantities of CSI (one or more CSI parameters) to be reported (report quantity information, for example, "reportQuantity" as the RRC IE)
· Information regarding an RS resource used to generate the quantity (the CSI parameter) (resource information, for example, "CSI-ResourceConfigId" as the RRC IE)
· Information regarding a frequency domain to be subjected to the CSI reporting (frequency domain information, for example, "reportFreqConfiguration" as the RRC IE)

For example, the report type information may indicate periodic CSI (P-CSI) reporting, aperiodic CSI (A-CSI) reporting, or semi-permanent (semi-persistent) CSI (SP-CSI) reporting.

In addition, the report quantity information may specify at least one combination of the CSI parameters (for example, CRI, RI, PMI, CQI, LI, L1-RSRP, and the like).

Further, the resource information may be an ID of the RS resource. The RS resource may include, for example, a non zero power CSI-RS resource or SSB, and a CSI-IM resource (for example, a zero power CSI-RS resource).

The UE performs channel estimation by using the received RS, and estimates a channel matrix H. The UE feeds back an index (PMI) that is determined on the basis of the estimated channel matrix.

The PMI may indicate a precoder matrix (also simply referred to as a precoder) that is considered by the UE as being appropriate for downlink (DL) transmission to the UE. Each value of the PMI may correspond to one precoder matrix. A set of values of the PMI may correspond to a set of different precoder matrices that is called a precoder codebook (also simply referred to as a codebook).

In a space domain, the CSI reporting may include one or more types of CSI. For example, the CSI may include at least one of a first type (Type 1 CSI) used for selection of a single beam or a second type (Type 2 CSI) used for selection of multiple beams. The single beam may be rephrased as a single layer, and the multiple beams may be rephrased as a plurality of beams. The Type 1 CSI may not assume multiuser multiple input multiple output (MIMO), and the Type 2 CSI may assume the multiuser MIMO.

The codebook may include a codebook for the Type 1 CSI (also referred to as the Type 1 codebook or the like) and a codebook for the Type 2 CSI (also referred to as the Type 2 codebook or the like). In addition, the Type 1 CSI may include a Type 1 single-panel CSI and a Type 1 multi-panel CSI, and different codebooks (the Type 1 single-panel codebook and the Type 1 multi-panel codebook) may be defined.

In the present disclosure, Type 1 and Type I may be interchangeable. In the present disclosure, Type 2 and Type II may be interchangeable.

The type of uplink control information (UCI) may include at least one of hybrid automatic repeat request acknowledgement (HARQ-ACK), a scheduling request (SR), or CSI. The UCI may be carried on the PUCCH or the PUSCH.

The UE may report a list of supported CSI-RS resources (for example, supportedCSI-RS-ResourceList) for each CSI codebook type (or for each codebook parameter). For example, the UE reports information regarding the maximum number (or a maximum value) of transmission ports per resource, the maximum number of resources per band, and the total number of transmission ports per band (for example, {maxNumberTxPortsPerResource, maxNumberResourcesPerBand, and totalNumberTxPortsPerBand}).

The maximum number of transmission ports per resource (maxNumberTxPortsPerResource) indicates the maximum number of transmission ports in the resource (for example, the maximum number of transmission ports that can be simultaneously configured in the CSI-RS resource). The maximum number of resources per band (maxNumberResourcesPerBand) indicates the maximum number of resources (for example, the maximum number of CSI-RS resources that can be simultaneously configured over all CCs) in all CCs (or cells) in the band. The total number of transmission ports per band (totalNumberTxPortsPerBand) indicates the total number of transmission ports in all CCs in the band (for example, the total number of transmission ports that can be simultaneously configured over all CCs). Note that the CCs correspond to CCs included in the band.

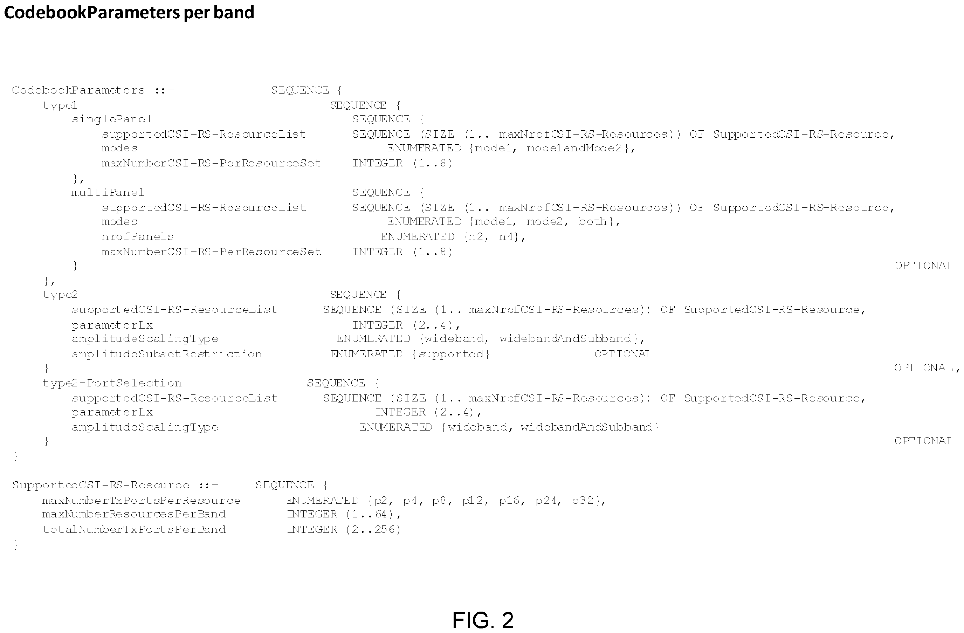

The UE may report codebook parameters (for example, codebookParameters) related to the codebook as band parameters (for example, BandNR parameters) for each band. The codebook parameters may indicate parameters corresponding to a codebook (or a codebook type) supported by the UE and parameters corresponding to the codebook. The codebook parameters may include at least one of the following parameters (1) to (4) (Fig. 2). For example, (1) may be mandatory, and (2) to (4) may be optional.
(1) Parameter of a type 1 single panel codebook (type1 singlePanel) supported by the UE
(2) Parameter of a type 1 multi-panel codebook (type1 multipanel) supported by the UE
(3) Parameter of a Type 2 codebook (type2) supported by the UE
(4) Parameter of a type 2 codebook (type2-PortSelection) including port selection supported by the UE

Each of the parameters (1) to (4) may include information (supportedCSI-RS-ResourceList) regarding a list of CSI-RS resources supported by each codebook type. In addition, the information regarding the list of CSI-RS resources may include the following list of parameters described above.
· Maximum number of transmission ports per resource (maxNumberTxPortsPerResource)
· Maximum number of resources per band (maxNumberResourcesPerBand)
· Total number of transmission ports per band (totalNumberTxPortsPerBand)

The parameters (1) to (4) related to the codebooks reported by the UE may be referred to as FG2-36/2-40/2-41/2-43. The parameters {a first parameter (for example, maxNumberTxPortsPerResource), a second parameter (for example, maxNumberResourcesPerBand), and a third parameter (for example, totalNumberTxPortsPerBand)} included in the list of CSI-RS resources may be referred to as triplets, for example. The triplets may be replaced with a combination of a plurality of parameters (or elements) included in the list of CSI-RS resources.

### [Band Combination]

When the UE performs communication combining a plurality of bands, it is assumed that the CSI-RS is configured in each band.

It is also conceivable that a UE that supports communication using a combination of bands shares a CSI process unit (or a CSI control unit) between the bands. For example, it is conceivable that UEs that share the CSI process unit between the bands have the same CSI processing capability both within and between the bands. The combination of bands may also be referred to as a band combination (BC).

Therefore, it is assumed that the UE supporting the BC reports the UE capability of the CSI codebook for each combination of bands, in addition to the UE capability of the CSI codebook for each band. For example, it is assumed that the UE supporting the BC reports a predetermined parameter for each band combination (BC).

As the predetermined parameter (for example, CA-ParametersNR or csi-RS-IM-ReceptionForFeedbackPerBandComb), the UE may report a parameter (for example, maxNumberResourcesPerBC or maxNumberSimultaneousNZP-CSI-RS-ActBWP-AllCC) related to the maximum number of CSI-RS resources in the BC and the total number of ports (for example, totalNumberTxPortsPerBC or totalNumberPortsSimultaneousNZP-CSI-RS-ActBWP-AllCC) .

The parameter related to the maximum number of CSI-RS resources in the BC may correspond to the maximum number of CSI-RS resources configured simultaneously over all CCs in the active BWPs. This parameter limits the total number of CSI-RS resources which NW can configure over all CCs.

The parameter related to the total number of ports in the BC may correspond to the total number of ports of the CSI-RS resources configured simultaneously over all CCs in the active BWPs. This parameter limits the total number of ports which NW can configure over all CCs.

On the other hand, in a case where a plurality of combinations of the maximum number of CSI-RS resources (for example, maxNumberResourcesPerBC) and the total number of ports (for example, totalNumberTxPortsPerBC) are reported for each BC, a case where the number of resources/the number of ports exceeding the UE capability is configured may occur.

For example, it is assumed that the UE has the following UE capability (the number of ports per resource and the number of resources) for a band A, a band B, and a combination of the band A and the band B.
Band A: (8, 6), (16, 2)
Band B: (8, 6), (16, 2)
Band A + B: (8, 6), (16, 2)

With the UE capability, when eight ports are configured for each resource, the UE supports six resources over the band A and the band B. Further, when 16 ports are configured for each resource, the UE supports two resources over the band A and the band B.

Here, it is assumed that the UE reports the values of (6, 48) and (2, 32) as the predetermined parameters (maxNumberResourcesPerBC and totalNumberTxPortsPerBC) related to the BC (band A + band B) (the maximum number of transmission ports per resource (maxNumberTxPortsPerResource) is not reported).

When the UE reports (6, 48) and (2, 32) as the predetermined parameters related to the BC (here, the band A + B), there may be a possibility that the following structure (a total of 48 ports in three resources) is configured by the network.
Band A: 16 ports + 16 ports (two resources)
Band B: 16 ports (one resource)

This is because triplets (16, 2, 32) are satisfied for the band A, triplets (16, 2, 32) are satisfied for the band B, and (6, 48) is satisfied for the band A + B (that is, three resources are simultaneously configured in the band A + B, and the total number of ports is 48 or less.). However, such a configuration (for example, a configuration of three resources including 16 ports in each resource) may exceed the UE capability.

To avoid the configuration exceeding the UE capability, the UE needs to report (underreport) only (2, 32) without reporting (6, 48) as the predetermined parameter.

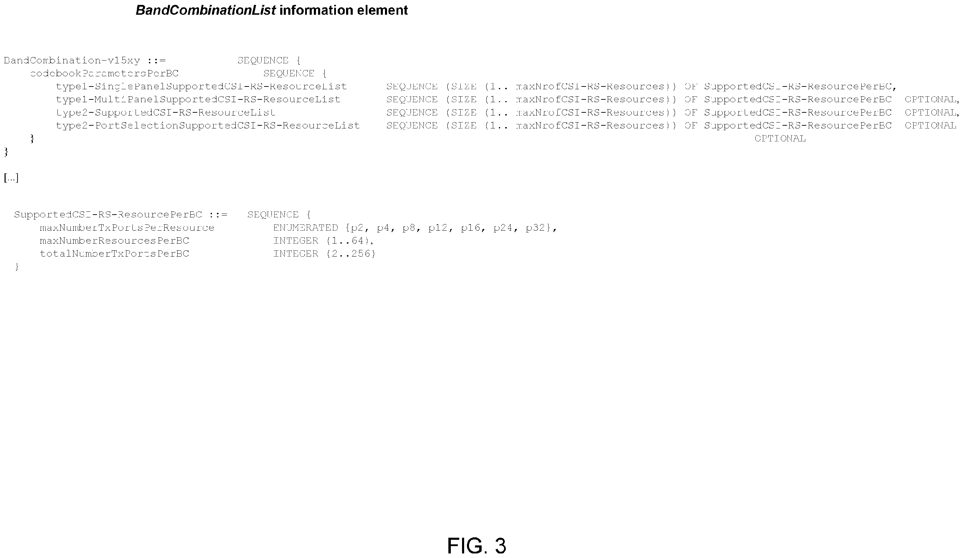

Therefore, it is conceivable that the UE reports the maximum number of ports (for example, maxNumberTxPortsPerResource or maxNumberTxPortsPerResourceperBC) per resource for the BC (or per BC). For example, it is assumed that the UE reports triplets (first parameter (for example, maxNumberTxPortsPerResource), second parameter (for example, maxNumberResourcesPerBC), and third parameter (for example, totalNumberTxPortsPerBC)) per CSI codebook for the BC (refer to Fig. 3). In such a case, signaling overheads reported by the UE may increase.

In addition, it is assumed that the UE in the future radio communications system (for example, Rel. 16 or later) reports a new UE capability in addition to (or instead of) the UE capability defined in an existing system (for example, Rel. 15) as the UE capability related to the CSI codebook. For example, the UE capability (for example, Rel. 15 UE cap.) defined in the existing system may be the following UE capability #1, and the new UE capability (for example, Rel. 16 UE cap.) may be at least one of the following UE capabilities #2 to #6.

### <Rel. 15 CSI-codebook cap.>

UE capability #1: triplets of Rel. 15 CSI codebooks (per band)

### <Rel. 16 CSI-codebook cap.>

UE capability #2: triplets of Rel. 15 CSI codebooks (per band)
UE capability #3: triplets of Rel. 15 CSI codebooks (per BC)
UE capability #4: triplets of Rel. 16 CSI codebooks (per band)
UE capability #5: triplets of Rel. 16 CSI codebooks (per BC)
UE capability #6: concatenated CSI codebook of Rel. 16 CSI and Rel. 15 CSI

For example, the UE capabilities #1, #2, and #3 may be reported for each predetermined codebook type. The predetermined codebook type may be at least one of type 1 single panel (R15 Type 1 single panel) supported in Rel. 15, type 1 multi-panel (R15 Type 1 multi panel) supported in Rel. 15, type 2 (R15 Type 2) supported in Rel. 15, or type 2 port selection (R15 type 2 port selection) supported in Rel. 15.

The UE capabilities #4 and #5 may be reported for each codebook type supported in Rel. 16. A codebook type supported in Rel. 16 may be at least one of type 2 (R16 type 2) supported in Rel. 16 or type 2 port selection (R16 type 2 port selection) supported in Rel. 16.

As described above, in the future radio communication system, when a combination of a plurality of parameters (for example, triplets) is reported for each UE capability or each CSI codebook type, an information amount/data size reported by the UE becomes very large. As a result, the communication throughput may decrease.

Therefore, the present inventors have studied a method for suppressing an increase in reporting overheads of the UE capability, and have conceived the present embodiment. For example, one aspect of the present embodiment may report information (for example, an index) corresponding to triplets without reporting a value of a combination (triplets) of a plurality of parameters (or elements) for each band/each BC.

Hereinafter, embodiments according to the present disclosure will be described in detail with reference to the drawings. A radio communication method and each aspect according to each embodiment may be applied independently, or may be applied in combination with others. Note that, in the present disclosure, "A/B" may be replaced with "at least one of A or B".

In the following description, a port, a CSI-RS port, and a port for a CSI-RS resource may be replaced with each other. The triplets in the present disclosure may mean parameters {first parameter (for example, maxNumberTxPortsPerResource), second parameter (for example, maxNumberResourcesPerBand/PerBC), and third parameter (for example, totalNumberTxPortsPerBand/PerBC)} included in a list of CSI-RS resources.

In the following description, the maximum number of CSI-RS resources (for example, maxNumberResourcesPerBC) and the maximum number of CSI-RS resources in all CCs/active BWPs (for example, maxNumberSimultaneousNZP-CSI-RS-ActBWP-AllCC) may be replaced with each other. The total number of ports (for example, totalNumberTxPortsPerBC) and the total number of ports of CSI-RS resources in all CCs/active BWPs (for example, totalNumberPortsSimultaneousNZP-CSI-RS-ActBWP-AllCC) may be replaced with each other.

### (First Aspect)

In the first aspect, a case where control is performed such that, for each band/each BC, instead of reporting the value of each element included in the combination of the plurality of elements (or the triplets), the information (for example, the index) corresponding to the triplets is reported will be described.

Note that, in the following description, a case where the UE capability is applied to at least one of the UE capability #2 to the UE capability #6 described above will be described as an example, but the UE capability to which the present embodiment can be applied is not limited thereto.

The UE may perform control to report the terminal capability (for example, Rel. 16 CSI-codebook cap.) for the CSI codebook by using information corresponding to the triplets (or a triplet candidate). The information corresponding to the triplet candidate may be an index of the triplet candidate or an index list of the triplet candidate.

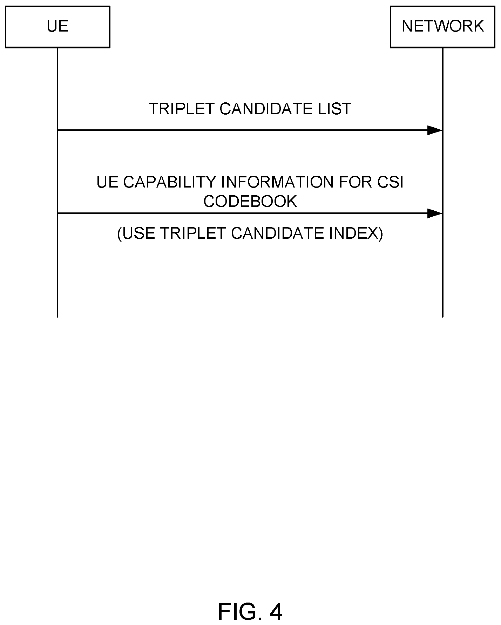

The UE may report one or more triplet candidates (or a candidate list including one or more triplet candidates). The UE may report the triplet candidates (or a triplet candidate list) separately from the terminal capability for the CSI codebook (refer to Fig. 4).

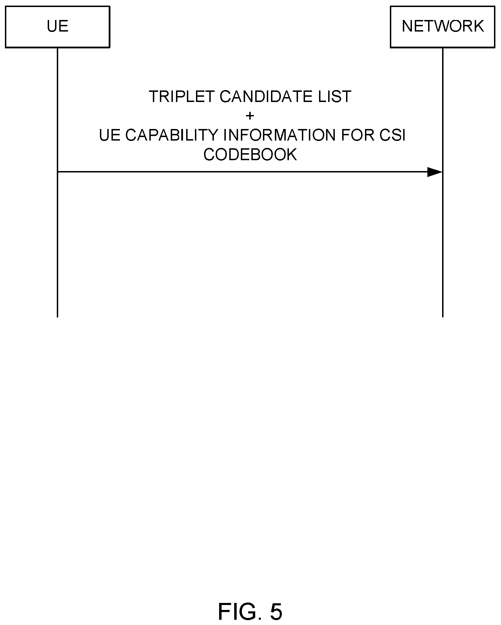

Note that information regarding the triplet candidate list and information regarding the terminal capability for the CSI codebook may be reported at the same timing (refer to Fig. 5). In this case, the information regarding the triplet candidate list and the information regarding the terminal capability for the CSI codebook may be included in different information elements and reported, or may be included in the same information elements and reported.

The triplet candidate list (or each triplet candidate) may be configured to be associated with a specific index or may be configured to be able to be designated with the specific index. For example, the UE may report the triplet candidate list, for example, as follows. The triplet candidate list (for example, the triplet candidate number or the like) to be reported is not limited thereto.

### <Triplet candidate list>

(x1, y1, z1) : index #1
(x2, y2, z3) : index #2
(x3, y3, z3): index #3
(x4, y4, z4): index #4
(x5, y5, z5): index #5

For example, the triplet candidate index #3 means the triplets (x3, y3, z3).

A maximum value of the triplet candidate list size (or the number of triplet candidates) may be defined in the specification, or may be notified from the network to the UE. The UE performs control to report the triplet candidate list within a range not exceeding the maximum value (for example, 20). In addition, the UE may report a smaller number of candidate lists than the maximum value.

On the basis of the reported triplet candidate list, the UE may control reporting of each UE capability (here, triplets corresponding to each codebook type of the UE capabilities #2 and #3) for the CSI codebook as follows. Here, it is assumed that the reported triplet candidate list is (x1, y1, z1), (x2, y2, z3), (x3, y3, z3), (x4, y4, z4), and (x5, y5, z5).

### <UE capability #2: triplets of the Rel. 15 CSI codebook (per band)>

· Codebook type #1: index list = (1, 2, 3, 4, 5)
· Codebook type #2: index list = (1, 2, 3)
· Codebook type #3: index list = (1)
· Codebook type #4: index list = (1)

### <UE capability #3: triplets of Rel. 15 CSI codebook (per BC) >

· Codebook type #1: index list = (1, 2, 3, 4, 5)
· Codebook type #2: index list = (1, 2, 3)
· Codebook type #3: index list = (1)
· Codebook type #4: index list = (1)

The codebook type #1 may be R15 Type 1 single panel, the codebook type #2 may be R15 Type 1 multi panel, the codebook type #3 may be R15 Type 2, and the codebook type #4 may be R15 type 2 port selection. Note that the present disclosure is not limited thereto.

The UE may also control reporting of the UE capabilities #4, #5, and #6 on the basis of the reported triplet candidate list (for example, using an index corresponding to the triplets).

As described above, in each UE capability (or reporting per band/per BC), reporting of the triplets for each codebook type is performed using the index, so that an increase in overheads of signaling reported by the UE can be suppressed.

For example, when the maximum value of the triplet candidate list size (or the number of triplet candidates) is 20, in reporting of the triplets corresponding to each codebook type, an index list of integers 1 to 20 may be reported. In this case, reporting can be performed in 20 bits in each index list (for example, the bitmap format).

### <Variation 1>

When the UE reports the UE capability corresponding to each codebook type by using the index corresponding to the triplets, the UE may perform control to report consecutive indexes. That is, the indexes included in the index list reported by the UE may be limited to consecutive indexes.

When the maximum value of the triplet candidate list size (or the number of triplet candidates) is 20, the UE may report the start index (for example, one of 20) and the length/number of indexes (one of less than 20). As a result, it is possible to effectively reduce overheads (for example, the number of bits) of signaling reported by the UE.

Alternatively, when the UE reports the UE capability corresponding to each codebook type by using the index corresponding to the triplets, the UE may perform control to report consecutive indexes including a specific index (for example, the index #1). That is, the indexes included in the index list reported by the UE may be limited to the consecutive indexes starting from the specific index.

When the maximum value of the triplet candidate list size (or the number of triplet candidates) is 20 and the specific index is #1, the UE may report the length/number of indexes (one of 19). As a result, it is possible to effectively reduce overheads (for example, the number of bits) of signaling reported by the UE.

### <Variation 2>

In the above description, the case where the UE reports one or more triplet candidates (or a candidate list including one or more triplet candidates) has been described, but the present disclosure is not limited thereto. The candidate list of one or more triplets may be defined in the specification. For example, the candidate list of triplets (or each triplet candidate) may be defined/configured in association with a specific index. Alternatively, the candidate list of one or more triplets may be notified/configured from the network. For example, the network may use the UE capability enquiry (for example, UECapabilityEnquiry) information to notify/configure the UE of the candidate list of triplets.

In this case, since the UE does not need to report one or more triplet candidates (or a candidate list including one or more triplet candidates), overheads (for example, the number of bits) of signaling reported by the UE can be reduced.

### (Second Aspect)

In a second aspect, a candidate list (or triplet candidates) of triplets used by the UE will be described.

The reporting/configuring of triplet candidates (or a triplet candidate list) may be controlled in a predetermined unit. The predetermined unit may be at least one of a UE unit, a band unit, or a BC unit.

### <UE Unit>

For example, triplet candidates (or a triplet candidate list) may be reported/configured for each UE (or in a UE unit).

For example, in the NR UE capability (NR UE cap.), a candidate list of one set of triplets may be reported for each UE. In this case, the certain UE may perform control such that a triplet candidate list is not reported for each band and each BC (or such that a common triplet candidate list is reported for a plurality of bands/BCs).

The UE may use the same triplet candidate list to report the UE capability (for example, triplets) for the CSI codebook reported for each band and the UE capability (for example, triplets) for the CSI codebook reported for each BC.

### <Band unit/BC unit>

The triplet candidates (or the triplet candidate list) may be reported/configured for each band/BC (or in a band unit/BC unit).

For example, a candidate list of one set of triplets may be reported for each band (for example, reporting for each band) and for each BC (for example, reporting for each BC). In this case, the UE uses the first triplet candidate list to report the UE capability (for example, triplets) for the CSI codebook reported for each band. On the other hand, the UE may use the second triplet candidate list to report the UE capability (for example, triplets) for the CSI codebook reported for each BC.

That is, the common triplet candidate list may be reported/configured for the UE capability of performing reporting in a band unit, and the common triplet candidate list may be reported/configured for the UE capability of performing reporting in a BC unit. In this case, each of an index #X of the triplet candidate list reported for each band and an index #X of the triplet candidate list reported for each BC may indicate different triplets.

As described above, a candidate list of one set of triplets is reported/configured for each band/BC and each BC, so that the triplets can be reported more flexibly.

Alternatively, the triplet candidate list may be reported for each band. For example, when the UE capability for the CSI codebook is reported for each of n bands, a candidate list of n sets of triplets may be reported/configured.

In addition, the triplet candidate list may be reported for each BC. For example, when the UE capability for the CSI codebook is reported for each of m BCs, a candidate list of m sets of triplets may be reported/configured.

As a result, it is possible to more flexibly configure the triplets to be reported for each band/BC.

### <Configuration of Triplet Candidate List>

The triplet candidates (or the triplet candidate list) may be selected from predetermined triplets. For example, a predetermined triplet value reported by the UE may be applied to the triplet candidate list.

The predetermined triplet may be, for example, the UE capability #1 (Rel. 15 CSI codebook triplet (per band)) reported as the capability (Rel. 15 CSI-codebook cap.) for the CSI codebook in Rel. 15. For example, triplets corresponding to the respective codebook types reported in the UE capability #1 may be the triplet candidate list.

Each codebook type reported in the UE capability #1 may be at least one of the codebook type #1 (for example, R15 Type 1 single panel), the codebook type #2 (for example, R15 Type 1 multi panel), the codebook type #3 (for example, R15 Type 2), or the codebook type #4 (for example, R15 type 2 port selection).

The triplets corresponding to each CSI codebook type reported in the triplets (per band) of the CSI codebook in Rel. 15 may be triplet candidates (or a triplet candidate list) used for reporting the capability (Rel. 16 CSI-codebook cap.) for the Rel. 16 CSI codebook. That is, the triplets of each CSI codebook type reported in the UE capability #1 may correspond to a triplet candidate list of each CSI codebook type in the UE capabilities #2 to #6.

For example, a list of triplets of the codebook type #1 (for example, R15 Type 1 single panel) reported in the UE capability #1 (or Rel. 15 CSI codebook cap.) may correspond to a candidate list of triplets of the codebook type including at least the codebook type #1 of the UE capabilities #2 to #6 (or Rel. 16 CSI codebook cap.).

Alternatively, triplets corresponding to a specific CSI codebook type among the CSI codebook types reported in the triplets (per band) of the CSI codebook in Rel. 15 may be a triplet candidate (or a triplet candidate list) used for reporting the capability (Rel. 16 CSI-codebook cap.) for the Rel. 16 CSI codebook. That is, the triplets of the specific CSI codebook type among the CSI codebook types reported in the UE capability #1 may correspond to a triplet candidate list of each CSI codebook type in the UE capabilities #2 to #6.

For example, a list of triplets of the codebook type #1 (for example, R15 Type 1 single panel) reported in the UE capability #1 (or Rel. 15 CSI codebook cap.) may correspond to a candidate list of triplets of all codebook types of the UE capabilities #2 to #6 (or Rel. 16 CSI codebook cap.).

As described above, the triplets actually reported as the UE capability (for example, the UE capability for the codebook type) are used as the triplet candidate (or the triplet candidate list), so that the UE does not need to report the triplet candidate list. As a result, it is possible to suppress an increase in overheads (for example, the number of bits) of signaling reported by the UE.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

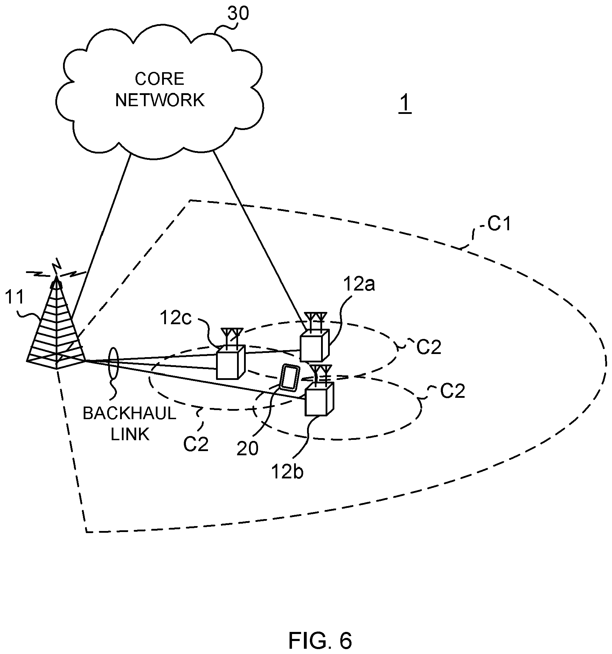

Fig. 6 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)) .

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) or dual connectivity (DC).

Each CC may be included in at least one of a first frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

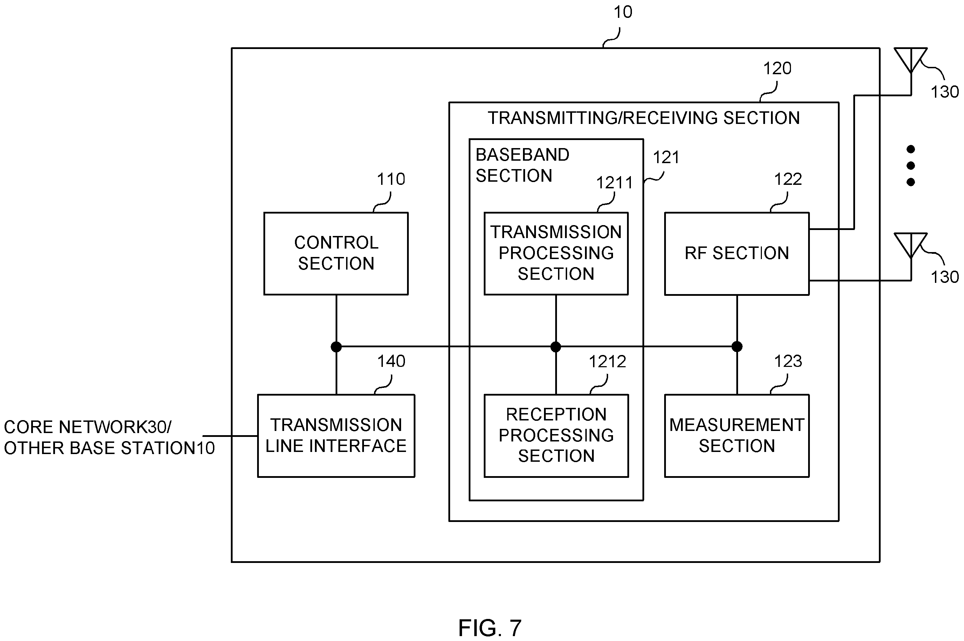

Fig. 7 is a diagram illustrating an example of a configuration of a base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam (Tx beam) or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a base band signal.

The transmitting/receiving section 120 (RF section 122) may perform modulation to a radio frequency range, filtering processing, amplification, and the like on the base band signal, to transmit a signal in the radio frequency range via the transmission/reception antenna 130.

Meanwhile, the transmitting/receiving section 120 (RF section 122) may perform amplification, filtering processing, demodulation to a base band signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

The transmitting/receiving section 120 may receive information of a terminal capability corresponding to a channel state information (CSI) codebook type reported on the basis of an index corresponding to a candidate of a combination of a plurality of parameters for a CSI resource.

The control section 110 may control transmission of the CSI resource on the basis of the received terminal capability information.

### (User Terminal)

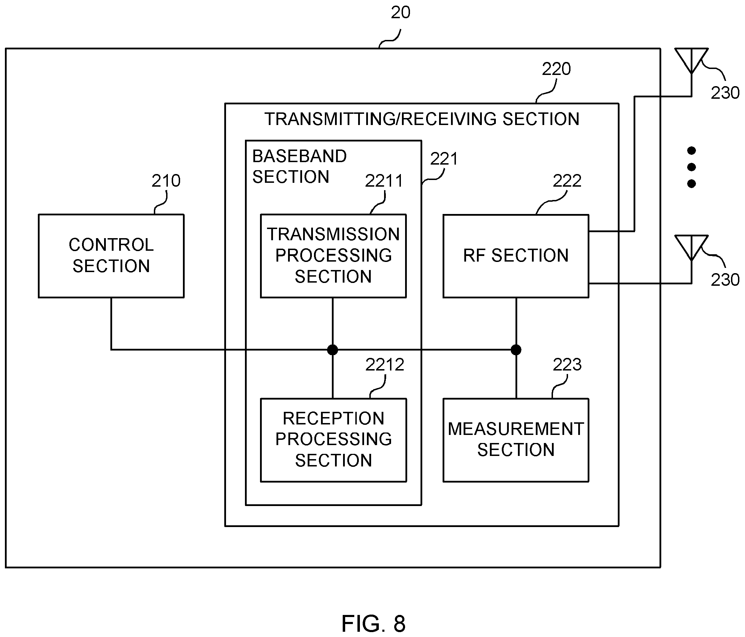

Fig. 8 is a diagram illustrating an example of a configuration of a user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam (Tx beam) or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a base band signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the base band signal, and may transmit a signal in the radio frequency range via the transmission/reception antenna 230.

Meanwhile, the transmitting/receiving section 220 (RF section 222) may perform amplification, filtering processing, demodulation to a base band signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 or the transmission/reception antenna 230.

The transmitting/receiving section 220 may transmit a terminal capability corresponding to a channel state information (CSI) codebook type by using an index corresponding to a combination candidate (for example, a triplet candidate/triplet candidate list) of a plurality of parameters for a CSI resource. The transmitting/receiving section 220 may transmit information including the combination candidate of the plurality of parameters.

The control section 210 may control reporting of a terminal capability corresponding to a channel state information (CSI) codebook type by using an index corresponding to a combination candidate of a plurality of parameters for a CSI resource.

The control section 210 may separately control (or configure/apply) the number of indices reported as the terminal capability for different CSI codebook types. The combination candidate of the plurality of parameters may be configured or reported in at least one of a terminal unit, a band unit, or a band combination unit.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional block may be implemented by combining the one or the plural apparatuses with software.

Here, functions include, but are not limited to, determining, determining, judging, computing, calculating, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning. For example, a functional block (component) that has a transmission function may be referred to as a transmitting section (transmitting unit), a transmitter, and the like. In any case, as described above, the implementation method is not particularly limited.

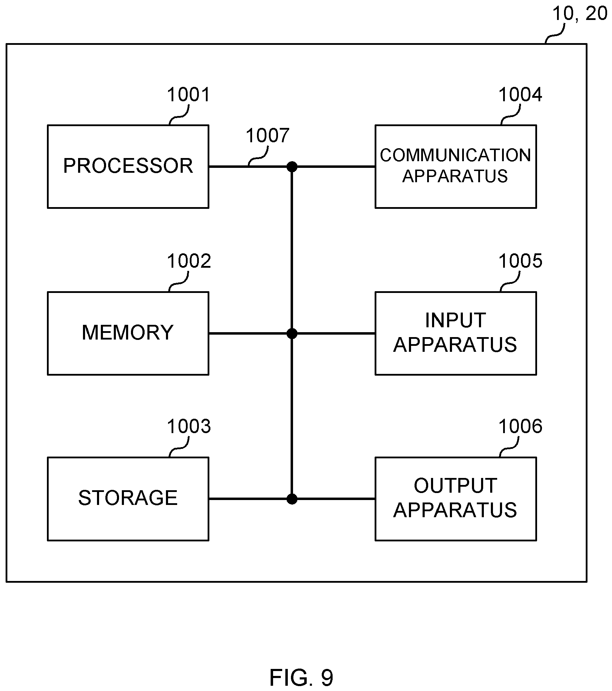

For example, the base station, the user terminal, and so on according to one embodiment of the present disclosure may function as a computer that executes the processing of the radio communication method of the present disclosure. Fig. 9 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, or a unit can be replaced with each other. The hardware configuration of the base station 10 and the user terminal 20 may be configured including one or a plurality of the apparatuses illustrated in the drawings, or may be configured without including some apparatuses.

For example, although only one processor 1001 is illustrated, there may be a plurality of processors. Further, the processing may be executed by one processor, or the processing may be executed by two or more processors simultaneously or sequentially, or by using other methods. Note that, the processor 1001 may be implemented with one or more chips.

For example, each function of the base station 10 and the user terminal 20 is implemented by causing predetermined software (program) to be read onto hardware such as the processor 1001 and the memory 1002, and by the processor 1001 performing arithmetic operation to control communication via the communication apparatus 1004 and control at least one of reading or writing of data in the memory 1002 and the storage 1003.

The processor 1001 controls the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads a program (program code), a software module, data, and the like from at least one of the storage 1003 or the communication apparatus 1004 into the memory 1002, and executes various types of processing in accordance with these. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 may store a program (program code), a software module, and the like executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmitting/receiving device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, apparatuses such as the processor 1001 and the memory 1002 are connected to each other by the bus 1007 for communicating information. The bus 1007 may be formed by using a single bus, or may be formed by using different buses for respective connections between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in a time domain. Each of the one or more periods (frames) included in the radio frame may be referred to as a subframe. Further, the subframe may include one or more slots in the time domain. The subframe may have a fixed time length (for example, 1 ms) that does not depend on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as a PDSCH (PUSCH) mapping type B.

The radio frame, subframe, slot, mini slot, and symbol all represent a time unit when transmitting a signal. The radio frame, the subframe, the slot, the mini slot, and the symbol may be called by other applicable names, respectively. Note that, the time units such as the frame, subframe, slot, mini slot, and symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that, the unit indicating the TTI may be referred to as the slot, mini slot, and the like instead of the subframe.

Here, the TTI refers to, for example, the minimum time unit of scheduling in the radio communication. For example, in the LTE system, a base station performs scheduling to allocate radio resources (a frequency bandwidth, transmission power, and the like that can be used in each user terminal) to each user terminal in TTI units. Note that, definition of the TTI is not limited to this.

The TTI may be a transmission time unit of channel coded data packet (transport block), code block, codeword, and the like, or may be a processing unit of scheduling, link adaptation, and the like. Note that, when the TTI is given, a time interval (for example, the number of symbols) to which the transport block, code block, codeword, and the like are actually mapped may be shorter than the TTI.

Note that, when one slot or one mini slot is referred to as the TTI, one or more TTIs (that is, one or more slots or one or more mini slots) may be the minimum time unit of scheduling. Furthermore, the number of slots (the number of mini slots) forming the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that, the long TTI (for example, the usual TTI, subframe, and the like) may be replaced with a TTI having a time length longer than 1 ms, and the short TTI (for example, the shortened TTI and the like) may be replaced with a TTI having a TTI length shorter than the TTI length of the long TTI and not shorter than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Furthermore, the RB may include one or more symbols in the time domain, and have the length of one slot, one mini slot, one subframe, or one TTI. One TTI, one subframe, and the like may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and numbered within the BWP.

The BWP may include a BWP for UL (UL BWP) and a BWP for DL (DL BWP). For the UE, one or more BWPs may be configured within one carrier.

At least one of the configured BWPs may be active, and it is not necessary to assume that the UE transmits and receives a predetermined signal/channel outside the active BWP. Note that, a "cell", a "carrier", and the like in the present disclosure may be replaced with a BWP.

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information, parameters, and the like described in the present disclosure may be represented using absolute values, represented using relative values with respect to given values, or represented using other corresponding information. For example, the radio resource may be indicated by a predetermined index.

The names used for the parameters and the like in the present disclosure are not limited names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented using any of various different technologies. For example, the data, instruction, command, information, signal, bit, symbol, chip, and the like that may be referred to throughout the above description may be represented by the voltage, current, electromagnetic wave, magnetic field or magnetic particle, optical field or photon, or any combination thereof.

Furthermore, the information, signals, and the like may be output in at least one of a direction from a higher layer to a lower layer or a direction from the lower layer to the higher layer. The information, signals, and the like may be input and output via a plurality of network nodes.

The information, signals, and the like that are input and output may be stored in a specific location (for example, in a memory), or may be managed using a management table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Furthermore, notification of predetermined information (for example, notification of "being X") does not necessarily have to be explicit, and may be given implicitly (for example, by not giving notification of the predetermined information or by notification of other information).

Judging may be performed by a one-bit value (0 or 1), by a Boolean indicated by true or false, or by comparison of numerical values (for example, comparison with a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Also, software, instructions, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, a reception apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with a base station. In this case, the base station 10 may have the function of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

Each aspect/embodiment described in the present disclosure may be used alone, used in a combination, and switched in association with execution. Further, the order of processing procedures, sequences, flowcharts, and the like of the aspects/embodiments described in the present disclosure may be re-ordered as long as there is no inconsistency. For example, regarding the method described in the present disclosure, elements of various steps are presented using an exemplary order, and the order is not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The term "on the basis of" used in the present disclosure does not mean "only on the basis of" unless otherwise specified. In other words, the term "on the basis of" means both "only on the basis of" and "at least on the basis of".

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a certain operation.

Furthermore, "determining" may be replaced with "assuming", "expecting", "considering", and the like.

As used in the present disclosure, the terms "connected" and "coupled," or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the phrase may mean that "A and B are different from C". Terms such as "leave", "coupled", or the like may also be interpreted in the same manner as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a control section that controls reporting of a terminal capability corresponding to a channel state information (CSI) codebook type by using an index corresponding to a candidate of a combination of a plurality of parameters for a CSI resource; and
a transmitting section that transmits information of the terminal capability corresponding to the CSI codebook type.

2. The terminal according to claim 1, wherein the transmitting section transmits information including the candidate of the combination of the plurality of parameters.

3. The terminal according to claim 1 or 2, wherein the control section separately controls the number of indices reported as the terminal capability for different CSI codebook types.

4. The terminal according to any one of claims 1 to 3, wherein the candidate of the combination of the plurality of parameters is configured or reported in at least one of a terminal unit, a band unit, or a band combination unit.

5. A radio communication method comprising:
controlling reporting of a terminal capability corresponding to a channel state information (CSI) codebook type by using an index corresponding to a candidate of a combination of a plurality of parameters for a CSI resource; and
transmitting information of the terminal capability corresponding to the CSI codebook type.

6. A base station comprising:
a receiving section that receives information of a terminal capability corresponding to a channel state information (CSI) codebook type reported on the basis of an index corresponding to a candidate of a combination of a plurality of parameters for a CSI resource; and
a control section that controls transmission of the CSI resource on the basis of the information of the terminal capability.
